# EUROPÄISCHE PATENTSCHRIFT

(11) **EP 0 799 981 B1**
(45) Veröffentlichungstag und Bekanntmachung des Hinweises auf die Patenterteilung: **29.09.2004**
(21) Anmeldenummer: 97105201.4
(22) Anmeldetag: 27.03.1997
(51) Int. Cl.: F02C 6/18, F24H 1/52, F24H 7/00, F24H 8/00, F02C 6/14

(54) **Kombinierte Kraft-und Wärmegasturbinenanlage**
Gas turbine heat and power plant
Centrale de cogénération de chaleur et d'électricité par turbine à gaz

(30) Priorität: 04.04.1996 DE 19613802
(43) Veröffentlichungstag der Anmeldung: 08.10.1997
(73) Patentinhaber: Forschungszentrum Jülich GmbH, 52425 Jülich (DE)
(72) Erfinder: von Lensa, Werner, Dr., 52379 Langerwehe (DE)

(56) Entgegenhaltungen:
- DE-A- 2 850 781
- DE-A- 2 941 252
- DE-A- 4 308 888
- US-A- 5 473 884
- US-A- 5 481 145

## Beschreibung

Die Erfindung bezieht sich auf ein Haus- oder Raumheizungssystem mit einer unter Überdruck stehenden Brennkammer zur Erzeugung heißen Gases (Heißgas) und einem Wärmetauscher zur Übertragung der Wärme des Heißgases auf einen Wärmeenergieträger.

Haus- oder Raumheizungssysteme sind üblicher Weise allein auf Wärmeerzeugung ausgerichtet. Es wird dabei davon ausgegangen, dass der zum Betrieb solcher Heizungssysteme zusätzlich erforderliche Energiebedarf zum Antrieb von Gebläsen, Pumpen und Steuerung als elektrische Energie fremdbestimmt in erster Linie aus dem Verteilernetz der Elektrizitätswerke zur Verfügung gestellt wird. Diese Voraussetzung ist jedoch nicht in allen Fällen zutreffend.

Bekannt ist die Erzeugung von Wärme und zugleich elektrischer Energie bei Heizkraftwerken, deren erzeugte Wärme zur Deckung industriellen Wärmebedarfs oder als Fernwärme für die Beheizung von Wohnräumen genutzt wird. Aus DE-OS 33 06 601 ist beispielsweise ein Gasturbinenheizkraftwerk bekannt.

Aus DE 29 41 252 A1 ist beispielsweise ein Raumheizungssystem bekannt, welches ein unter Überdruck stehende Brennkammer zur Erzeugung von heißem Gas sowie einen Wärmeaustauscher zur Übertragung und zeitweisen Speicherung der Wärme des Heißgases auf einen Wärmeenergieträger aufweist. Ferner ist ein vom Heizungssystem betriebener Stromerzeuger vorgesehen, der leistungsmäßig an den durchschnittlichen Tagesverbrauch angepasst ist.

Ähnliche Haus- oder Raumheizungssyteme umfassend eine Gasturbine mit Brennkammer, einen Wärmetauscher im Brennkammergehäuse sowie einen Stromerzeuger zur Erzeugung des Haushaltsenergiebedarfs sind aus DE 28 50 781 A und US 5,473,884 A bekannt.

Ferner ist in US 5,481,145 A eine Rotorwelle für eine Gasturbine/Verdichter/Generator-Einheit eines großen Kraftwerkes offenbart, die aktiv magnetisch gelagert ist. Dadurch wird eine wartungsarme, geräuscharme und kompakte Lagerung für hohe Drehzahlen erzielt.

Der Strombedarf von Haushalten beträgt im Jahresmittel nur etwa 10 % der benötigten Heizwärme. Es kommt daher nicht auf eine Optimierung des Wirkungsgrades der Anlagen zur Stromerzeugung weit oberhalb dieses Wertes an, sondern auf eine Vereinfachung und Kostensenkung.

Aufgabe der Erfindung ist es, ein einfaches, kompaktes und wartungsarmes Haus- oder Raumheizungssystem zur Verfügung zu stellen, welches gleichzeitig den für den Betrieb dieses Systems benötigten Strom selbst zur Verfügung stellt.

Diese Aufgabe wird bei einem Haus- oder Raumheizungssystem der eingangs genannten Art durch die im Anspruch 1 angegebenen Merkmale gelöst. Danach wird im Heizungssystem ein Stromerzeuger zumindest zur Stromerzeugung des Strombedarfs des Haus- oder Raumheizungssystems eingesetzt. Wird während der Stromerzeugung keine Wärme benötigt, so stehen Wärmespeicher zur Aufnahme der Wärme zur Verfügung, die vom Haus- oder Raumheizungssystem als Wärme/Kraftsystem bei der Stromerzeugung mit erzeugt werden muss. In vorteilhafter Weise wird bei einem solchen System eine optimale Nutzung des eingesetzten Brennstoffs erreicht. Da Wärme im Vergleich zu elektrischer Energie mit einfacheren Mitteln zu speichern ist, z. B. in Warmwasserspeichern, wird durch Betrieb der Anlage in Abhängigkeit vom Strombedarf insgesamt eine Kosten- und Energieersparnis erreicht.

Die Stromerzeugung erfolgt gemäß der Erfindung über eine Gasturbinen/Verdichter/Generator-Einheit (GVG- Einheit), die dem Wärmetauscher vorgeschaltet ist, der zur Übertragung der Wärme des Heißgases auf den Wärmeenergieträger des Haus- oder Raumheizungssystems dient. Der Wärmetauscher ist vom Abgas der Gasturbine der GVG-Einheit durchströmt und der Generator der Einheit ist mit seiner Leistung geeignet, zumindest den Strom zum Betreiben des Systems zu erzeugen. Die GVG-Einheit weist eine gemeinsame Rotorwelle für Gasturbine, Verdichter und Generator auf. Grundsätzlich ist die GVG-Einheit jedoch auch mehrwellig und bezüglich der Wärmenutzung auch mehrstufig auslegbar.

Die GVG-Einheit kann in herkömmlichen Heizungsanlagen statt der dort installierten Gas- oder Ölbrenner integriert werden, wobei der Brennraum dem vom Verdichter erzeugten Druck anzupassen ist. Die GVG-Einheit insbesondere mit gemeinsamer Rotorwelle für Gasturbine, Verdichter und Generator wird dem Wärmetauscher vorgeschaltet, wobei die Brennkammer zwischen Verdichter und Gasturbine der GVG- Einheit liegt.

Bei der Ausbildung eines Haus- oder Raumheizungssystem ist besonders auf möglichst geräusch- und vibrationsarmen Betrieb zu achten. Hierzu ist die Rotorwelle magnetisch gelagert. Magnetische Lager erweisen sich wegen ihrer Schmierungsfreiheit auch als verhältnismäßig wartungsarm. Darüber hinaus lässt sich bei magnetischer Lagerung durch Erhöhung der Umdrehungszahlen für die GVG-Einheit ein leistungsstarkes, kompaktes Systemaggregat mit ausreichender Betriebslaufzeit und Betriebssicherheit zur Verfügung stellen. Zur Magnetlagerung der Rotorwelle werden erfindungsgemäß Permanentmagnete verwendet.

Vorteilhaft sind alle heißgehenden Systemaggregate des Haus- oder Raumheizungssystems, wie insbesondere die Gasturbine, die Brennkammer und der Wärmetauscher, innerhalb des zur Umgebung hin wärmeisolierten Innenraums des Heizungskessels eingesetzt. Der Heizungskessel kann eine Wandkühlung aufweisen, um Wärmeverluste zu minimieren. So wird auch die als Verlustwärme von den für Haus- oder Raumheizungen einzusetzenden verhältnismäßig kleinen Gasturbinen erzeugte thermische Energie zur Haus- bzw. Raumheizung mitgenutzt. Auch bei dieser Ausbildungsvariante ist die GVG-Einheit auch mehrwellig auslegbar. Um für den elektrischen Eigenbedarf des Haus- oder Raumheizungssystems bei Stillstand der GVG-Einheit die erzeugte elektrische Energie zwischenspeichern zu können, ist am Generator vorteilhaft ein während der Betriebsphase der GVG-Einheit zu ladender Akkumulator angeschlossen. Statt eines Akkumulators kann zur elektrischen Energiespeicherung auch ein von der Gasturbine antreibbarer Schwungradspeicher mit elektrischem Generator vorgesehen sein. Begrenzt wird die Elektrizitätserzeugung insgesamt jedoch durch die Kapazität der Wärmespeicher des Haus- und Raumheizungssystems sowie durch den aktuellen Wärmebedarf. Bei Auslastung der Kapazität der Wärmespeicher können die Betriebsphasen der GVG-Einheit deshalb zweckmäßig unterbrochen werden.

In weiterer Ausgestaltung der Erfindung wird zur Erzeugung elektrischer Energie ein permanentmagnetisch erregter Generator eingesetzt, der zugleich als Anwurfmotor zur Inbetriebnahme des Verdichters der GVG-Einheit dient. Der Verdichter erzeugt einen Überdruck, der für den Abtransport von im Wärmetauscher abgekühlten Abgases in die Umgebung ausreichend ist. Der Druck ist insbesondere so gewählt, dass das Abgas im Wärmetauscher bis unter seine Kondensationstemperatur abkühlbar ist.

Im folgenden werden vorteilhafte Ausgestaltungen des in der Haus- oder Raumheizung vorgesehenen Wärmespeichers aufgezeigt. Als Wärmespeicher zwischen Gasturbine und Wärmetauscher kann ein vom Heißgas durchströmter Feststoff- Wärmespeicher eingesetzt werden. Der Wärmespeicher kann zugleich zur Vorwärmung verdichteter Verbrennungsluft vor deren Eintritt in die Brennkammer dienen. Zur Entladung des Wärmetauschers ist vom Verdichter der GVG-Einheit bei elektrischem Antrieb Kaltluft ansaugbar, die dann den Wärmespeicher zum Abtransport der Wärme durchströmt und als Heißluft gegebenenfalls über zusätzliche weitere Wärmetauscher zur Haus- oder Raumheizung genutzt wird. Die GVG-Einheit kann dazu entweder vom Anwurfmotor - ohne Brennstoffzufuhr - oder im Leerlauf auf variabler niedriger - Leistung gehalten werden.

Wegen seiner autarken Betriebsmöglichkeit eignet sich das Haus- oder Raumheizungssystem bevorzugt auch als mobile Einheit zur Wärme- und Stromerzeugung. Es lässt sich ebenfalls als mobiles stromautarkes Turbogebläse-Heizgerät einsetzen, wobei die GVG-Einheit lediglich die mechanische Energie zum Ausstoß der Heizgase erzeugt.

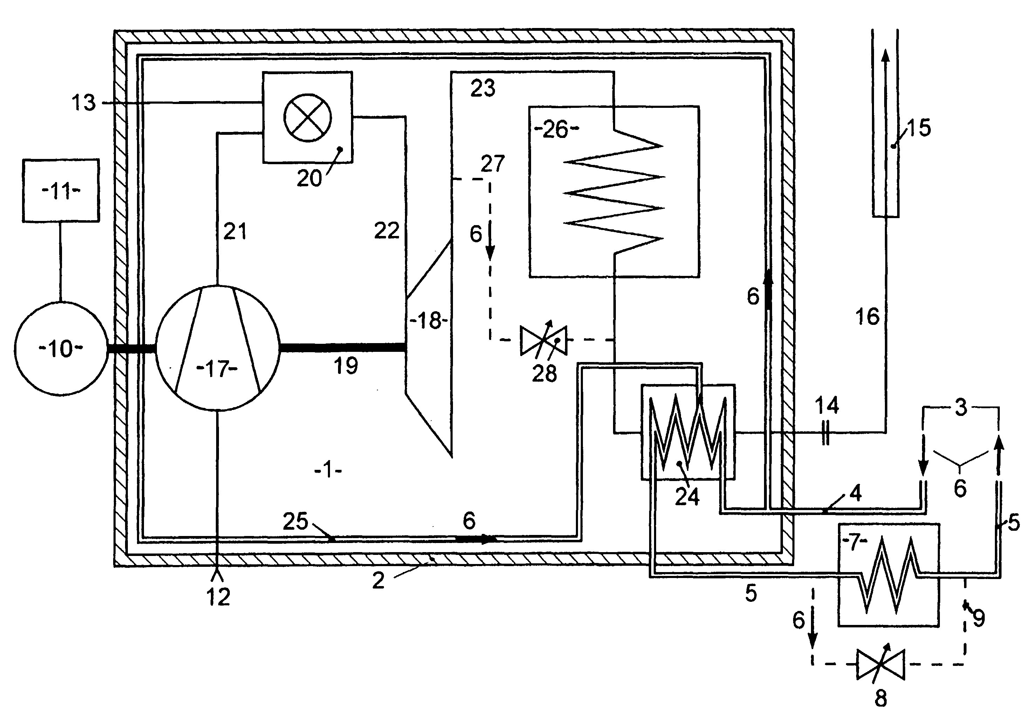

Nachfolgend wird die Erfindung und ihre weitere Ausbildung anhand eines in der Zeichnung schematisch wiedergegebenen Ausführungsbeispiels näher erläutert. Die Zeichnung zeigt von einem Haus- oder Raumheizungssystem den Heizungskessel. Die zur Aufheizung des Hauses oder der Räume eingesetzten Heizkörper, die vom im Heizungskessel erwärmten Wärmeenergieträger durchströmt sind, sind in der Zeichnung nicht dargestellt.

Die Zeichnung zeigt schematisch einen Heizkessel eines Haus- oder Raumheizungssystems mit wärmeisoliertem Innenraum 1. Der Heizkessel ist von einer mit einer Wärmeisolierung ausgestatteten Kesselwand 2 umgeben. Zum Innenraum 1 führen durch die Kesselwand 2 hindurch Anschlüsse für einen Heizungskreislauf 3 des Wärmeenergieträgers. So ist ein Anschluss für eine Rücklaufleitung 4 für den aus dem Heizungskreislauf zurückfließenden kalten Wärmeenergieträger und für den im Heizungskessel erwärmten, dem Heizungskreislauf erneut zugeführten Wärmeenergieträger ein Anschluss für den Wärmeträgervorlauf 5 vorgesehen. Im Wärmeträgervorlauf 5 befindet sich in Strömungsrichtung 6 des Wärmeenergieträgers gesehen noch ein Wärmespeicher 7, der vom Wärmeenergieträger noch vor Erreichen der Heizkörper des Haus- oder Raumheizungssystems im Wärmeaustausch aufladbar ist. Der den Wärmespeicher durchströmende Mengenanteil des Wärmeenergieträgers wird über ein Regelventil 8 gesteuert, das in einem Bypass 9 zum Wärmespeicher 7 eingesetzt ist. Im Ausführungsbeispiel ist als Wärmespeicher 7 ein Warmwasserspeicher vorgesehen.

Im Ausführungsbeispiel befindet sich außerhalb des heißen Innenraums 1 des Heizungskessels auch ein Generator 10 zur Stromerzeugung. Der Generator ist mit einem Speicher 11 zur Speicherung elektrischer Energie verbunden. Als Speicher elektrischer Energie lassen sich Akkumulatoren oder Schwungrad- Energiespeicher mit Generatoren einsetzen. Von solchen Speichern lässt sich bei Bedarf Strom auch während der Stillstandszeiten der GVG-Einheit entnehmen. Die Stromversorgung des Haus- oder Raumheizungssystems und eine gegebenenfalls mögliche Stromentnahme Dritter, insbesondere das Einspeisen erzeugten überschüssigen elektrischen Stroms ins Stromnetz, ist in der Zeichnung nicht dargestellt.

Der Heizungskessel weist an der Außenseite der Kesselwand 2 noch Anschlüsse zur Verbrennungsluftzufuhr 12, zur Brennstoffzufuhr 3 sowie einen Abgasflansch 14 zum Anschluss einer zum Kamin 15 geführten Abgasleitung 16 auf.

Der Generator 10 ist zusammen mit einem Verdichter 17 und einer Gasturbine 18, die beide im Innenraum 1 des Heizungskessels angeordnet sind, vorzugsweise auf einer gemeinsamen Rotorwelle 19 gelagert. Grundsätzlich ist die GVG-Einheit auch mehrwellig auslegbar. Generator 10, Verdichter 17 und Gasturbine 18 bilden eine Gasturbinen/Verdichter/Generator-Einheit (GVG-Einheit). Die Rotorwelle 19 der GVG-Einheit ist im Ausführungsbeispiel magnetisch gelagert. Bei dem Generator 10 handelt es sich um einen permanetmagnetisch erregten Generator. Er dient zugleich als Anwurfmotor zum Anlassen der Gasturbine 18 nach einem Stillstand.

Zwischen Verdichter 17 und Gasturbine 18 befindet sich eine im Ausführungsbeispiel ebenfalls im Innenraum 1 des Heizkessels angeordnete Brennkammer 20, in die die Brennstoffzufuhr 13 mündet. Vom Verdichter 17, der Verbrennungsluft über die Verbrennungsluftleitung 12 ansaugt und verdichtet, führt eine Druckluftleitung 21 zur Brennkammer 20. Brennstoff und Verbrennungsluft werden in der Brennkammer in üblicher Weise miteinander vermischt, beispielsweise mittels einer Brennerdüse. Das Brennstoff/Luft-Gemisch wird in der Brennkammer gezündet und verbrannt und als Heißgas in einer Heißgasleitung 22 zur Gasturbine 18 geleitet und hier entspannt. Zur Reduktion von Schadstoffen können auch Katalysatoren in der Brennkammer oder im Abgasstrom eingesetzt werden. Von der Gasturbine werden über die Rotorwelle 19 Verdichter 17 und Generator 10 der GVG-Einheit angetrieben. Das Heißgas, das die Gasturbine 18 verlässt, strömt in einer Heißgasverbindung 23 zum Wärmetauscher 24 des Haus- oder Raumheizungssystems. Im Wärmetauscher 24 wird die im Heißgas nach Antrieb der Gasturbine noch enthaltene thermische Energie auf den Wärmeenergieträger des Haus- oder Raumheizungssystems, im Ausführungsbeispiel auf Wasser übertragen. Der zu erhitzende Wärmeenergieträger und das die Wärme abgebende Heißgas durchströmen den Wärmetauscher 24 im Gegenstrom.

Der Wärmeenergieträger fließt in Strömungsrichtung 6 in den Wärmetauscher 24 ein, nachdem er in einer im Ausführungsbeispiel im Parallelstrom - gegebenenfalls im Bypass betriebenen - Kühlschlange 25 zur Kühlung der Kesselwand 2 und zur Aufnahme der Verlustwärme der im Innenraum 1 des Heizungskessels angeordneten Aggregate diente. Die Kühlschlange 25 ist an der Rücklaufleitung 3 im Innenwandbereich der Kesselwand 2 verlegt. In der Zeichnung ist die Kühlschlange lediglich schematisch mit einer ihrer Leitungswindungen entlang der inneren Wandseite der Kesselwand 2 dargestellt. In der Kühlschlange 25 wird der Anteil des in ihr rücklaufende Wärmeenergieträgers bereits vorgewärmt, bevor er in den Wärmetauscher 24 eintritt. Da alle wärmeerzeugenden Aggregate des Haus- oder Raumheizungssystems innerhalb des wärmeisolierten Innenraums 1 des Heizkessels angeordnet sind, werden Verluste für die im Heizkessel erzeugte thermische Energie sehr gering gehalten.

Der im Wärmetauscher 24 erhitzte Wärmeenergieträger wird über den Wärmeträgervorlauf 5 in den Heizungskreislauf 3 eingeführt, wobei bei entsprechender Einstellung des Regelventils 8 im Bypass 9 auch der externe Wärmespeicher 7 aufheizbar ist. Im Ausführungsbeispiel ist neben diesem äußeren Wärmespeicher 7 auch im Innenraum 1 des Heizkessels ein Wärmespeicher vorgesehen: zwischen Gasturbine 18 und Wärmetauscher 24 ist ein Feststoff-Wärmespeicher 26 eingesetzt, der vom Heißgas nach Verlassen der Gasturbine 18 erhitzbar ist.

Als Feststoffe werden im Ausführungsbeispiel Schamottesteine verwendet, die bis zur Gasaustrittstemperatur der GVG-Einheit aufheizbar sind. Möglich ist es, einen Bypass 27 für das Heißgas vorzusehen, der über ein im Bypass 27 eingesetztes Regelventil 28 eine Parallelströmung zum Feststoff-Wärmespeicher 26 oder dessen Umgehung ermöglicht. Im Feststoff-Wärmespeicher wird zeitlich überschüssige thermische Energie nach Art von Nachtspeicheröfen gespeichert, die dann während der Betriebspausen der GVG-Einheit zur Aufheizung des Wärmeenergieträgers genutzt werden kann. Für diesen Fall wird die GVG-Einheit quasi als Gebläse eingesetzt, wobei zum Antrieb der Generator dient, insbesondere in seiner Ausbildung als permanentmagnetisch erregter Generator. Alternativ ist auch ein separates Gebläse einsetzbar.

Der Feststoff-Wärmespeicher 26 kann auch zur Erhöhung des Wirkungsgrades der GVG-Einheit durch Vorwärmung des zugeführten Brennstoffs und der Verbrennungsluft dienen, bevor diese in die Brennkammer einströmen.

Das im Wärmetauscher 24 abgekühlte Heißgas strömt als Abgas über die Abgasleitung 16 und den Kamin 15 in die Umgebung ab. Im Ausführungsbeispiel ist der Wärmetauscher 24 so ausgelegt, dass das abströmende Abgas seine Kondensationstemperatur nicht unterschreitet. Wird eine derart weitgehende Abkühlung des Abgases angestrebt, ist es erforderlich, am Wärmetauscher 24 einen Kondensatablauf anzubringen. Der vom Verdichter 17 erzeugte Druck ist für das Abströmen das Abgases über den Kamin ausreichend.

Der Betrieb des Haus- oder Raumheizungssystems wird im Ausführungsbeispiel nach dem individuellen Strombedarf des Betreibers gesteuert, wobei insbesondere die für den Betrieb des Systems selbst benötigte elektrische Energie erzeugt wird. Über den vom Generator 10 gespeisten Speicher 11 für elektrische Energie lässt sich der für den Betrieb der Aggregate des Heizungssystems (z. B. Pumpen und Steuerorgane) benötigte Strombedarf während der Stillstandszeiten der GVG-Einheit decken. Überschüssiger Strom wird während der Heizperiode zu Spitzenlastzeiten ins Stromnetz eingespeist. Außerhalb der Heizperiode wird der elektrische Energiebedarf für den üblichen Haushaltsbetrieb vorwiegend aus dem Stromnetz bezogen.

(Die magnetgelagerte GVG-Einheit ermöglicht Drehzahlen im Bereich bis maximal ca. 200 000 U/Min. Die Baumaße der GVG-Einheit entsprechen näherungsweise denen üblicher Heizungsbrenner. Die Leistungsabgabe richtet sich nach dem Wärmebedarf der zu heizenden Gebäude, wobei die Netto-Stromerzeugung vom Wirkungsgrad der GVG- Einheit (10 - 20 %) vorgegeben ist.

### Bezugszeichenliste

- 1: Innenraum
- 2: Kesselwand
- 3: Heizungskreislauf
- 4: Rücklaufleitung
- 5: Wärmeträgervorlauf
- 6: Strömungsrichtung
- 7: Wärmespeicher
- 8: Regelventil
- 9: Bypass
- 10: Generator
- 11: Speicher für elektr. Energie
- 12: Verbrennungsluftzufuhr
- 13: Brennstoffzufuhr
- 14: Abgasflansch
- 15: Kamin
- 16: Abgasleitung
- 17: Verdichter
- 18: Gasturbine
- 19: Rotorwelle
- 20: Brennkammer
- 21: Druckluftleitung
- 22: Heißgasleitung
- 23: Heißgasverbindung
- 24: Wärmetauscher
- 25: Kühlschlange
- 26: Festsstoff-Wärmespeicher
- 27: Bypass
- 28: Regelventil

## Patentansprüche

1. Haus- oder Raumheizungssystem
a) mit einer Brennkammer (20), zur Erzeugung von heißem Gas,
b) mit einem Wärmetauscher (24), zur Übertragung der Wärme des heißen Gases auf einen Wärmeenergieträger,
c) einem Wärmespeicher (26), zur Speicherung der erzeugten Wärme,
d) sowie mit einem dem Wärmetauscher vorgeschalteten Stromerzeuger, umfassend eine Gasturbine/Verdichter/Generator-Einheit (10-17-18), der zumindest den Strombedarf des Haus- oder Raumheizungssystems zu liefern vermag,
e) wobei die Gasturbine/Verdichter/Generator-Einheit (10-17-18) eine gemeinsame Rotorwelle aufweist ,
**dadurch gekennzeichnet**,
f) dass die Rotorwelle für die Gasturbine/Verdichter/ Generator-Einheit (10-17-18) mittels, Permanentmagneten magnetisch gelagert ist.

2. Haus- oder Raumheizungssystem nach vorhergehendem Anspruch 1, bei dem der Generator permanent erregt auch als Anwurfmotor zur Inbetriebnahme des Verdichters ausgestaltet ist.

3. Haus- oder Raumheizungssystem nach vorhergehenden Ansprüchen 1 bis 2, bei dem die Brennkammer (20) zwischen Gasturbine (18) und Verdichter (17) angeordnet ist, und das Abgas der Gasturbine (18) zumindest teilweise durch den Wärmetauscher (24) zu leiten vermag.

4. Haus- oder Raumheizungssystem nach einem der vorhergehenden Ansprüche 1 bis 3, bei dem die Gasturbine (18), die Brennkammer und der Wärmetauscher innerhalb einer wärmeisolierenden Kesselwandung (2) angeordnet sind.

5. Haus- oder Raumheizungssystem nach einem der vorhergehenden Ansprüche 1 bis 4, bei dem zwischen Gasturbine(18) und Wärmetauscher (24) ein Feststoff-Wärmespeicher als Wärmespeicher (26) angeordnet ist.

6. Haus- oder Raumheizungssystem nach einem der vorhergehenden Ansprüche 1 bis 5, bei dem zur Energiespeicherung ein von der Gasturbine (18) antreibbarer Schwungradspeicher mit einem elektrischen Generator vorgesehen ist.

7. Haus- oder Raumheizungssystem nach einem der vorhergehenden Ansprüche 1 bis 6, bei dem ein Akkumulator angeschlossen ist, der sich während der Betriebsphase der Gasturbine/Verdichter/Generator-Einheit aufzuladen vermag.

8. Verwendung des Haus- oder Raumheizungssystems nach einem der vorhergehenden Ansprüche 1 bis 7, zur Stromerzeugung mit und ohne Abgaswärmenutzung.

9. Verwendung des Haus- oder Raumheizungssystems nach einem der vorhergehenden Ansprüche 1 bis 7, als mobile Einheit zur Wärme- und Stromerzeugung.

10. Verwendung des Haus- oder Raumheizungssystems nach einem der vorhergehenden Ansprüche 1 bis 7, als stromunabhängiges Turbogebläse-Heizgerät.

## Claims

1. House or Space Heating System, comprising
a) a combustion chamber (20) for producing hot gas;
b) a heat exchanger (24) for transferring heat of the hot gas to a heat energy carrier;
c) a heat storage (26) for storing the generated heat; and
d) upstream of the heat exchanger an electricity generator comprising a gas turbine/compressor/generator unit (10-17-18) capable of delivering at least the electricity required by the house or space heating system; and
e) the gas turbine/compressor/generator unit (10-17-18) comprises a common rotor shaft,
**characterised in that**
f) the rotor shaft for the gas turbine/compressor/generator unit (10-17-18) is magnetically mounted by means of a permanent magnet.

2. House or space heating system according to above Claim 1, with the generator, which is permanently excited , also being designed as starting motor for initiation of the compressor.

3. House or space heating system according to above Claims 1 to 2, where the combustion chamber (20) is accommodated between gas turbine (18) and compressor (17), and exhaust gas of the gas turbine (18) is at least partially ducted through the heat exchanger (24).

4. House or space heating system according to one of the above Claims 1 to 3, where the gas turbine (18), the combustion chamber and the heat exchanger are accommodated within a heat insulating tank wall (2).

5. House or space heating system according to one of above Claims 1 to 4 with a heat storage in the form of a solid heat storage arranged between the gas turbine (18) and the heat exchanger (24).

6. House or space heating system according to one of the above Claims 1 to 5, with provision of a centrifugal wheel store for energy storage, which is driven by the gas turbine (18), with an electric generator.

7. House or space heating system according to one of the above Claims 1 to 6, with an accumulator connected which can be charged during the operating phase of the gas turbine/compressor/generator unit.

8. Use of the house or space heating system according to one of the above Claims 1 to 7 for generating electricity with and without exhaust gas heat exploitation.

9. Use of the house or space heating system according to one of the above Claims 1 to 7 as a mobile unit for generating heat and electricity.

10. Use of the house or space heating system according to one of the above Claims 1 to 7, as electricity independent turbine blower heating unit.

## Revendications

1. Système de chauffage d'une maison ou d'une pièce,
a) comprenant une chambre de combustion (20) pour produire du gaz chaud,
b) comprenant un échangeur de chaleur (24) de transmission de la chaleur du gaz chaud à un agent caloporteur,
c) comprenant un accumulateur (26) de chaleur pour emmagasiner la chaleur produite,
d) et comprenant un générateur de courant qui est monté en amont de l'échangeur de chaleur et qui comprend une unité turbine à gaz/compresseur/génératrice (10 - 17 - 18) qui peut fournir au moins le courant dont a besoin le système de chauffage de la maison ou de la pièce,
e) l'unité turbine à gaz/compresseur/génératrice (10 - 17 - 18), comprenant un arbre commun de rotor,
**caractérisé**
f) **en ce que** l'arbre du rotor de l'unité turbine à gaz/compresseur/génératrice (10 - 17 - 18) est supportée magnétiquement au moyen d'aimants permanents.

2. Système de chauffage d'une maison ou d'une pièce suivant la revendication 1 précédente, dans lequel la génératrice est à excitation permanente pour servir aussi de moteur de lancement pour la mise en fonctionnement du compresseur.

3. Système de chauffage d'une maison ou d'une pièce suivant l'une des revendications 1 à 2 précédentes, dans lequel la chambre de combustion (20) est placée entre la turbine à gaz (18) et le compresseur (17) et les gaz qui s'échappent de la turbine à gaz (18) peuvent être envoyés au moins en partie dans l'échangeur de chaleur (24).

4. Système de chauffage d'une maison ou d'une pièce suivant l'une des revendications 1 à 3 précédentes, dans lequel la turbine à gaz (18), chambre de combustion et l'échangeur de chaleur sont disposés à l'intérieur d'une paroi (2) de chaudière calorifuge.

5. Système de chauffage d'une maison ou d'une pièce suivant l'une des revendications 1 à 4 précédentes, dans lequel un accumulateur de chaleur à matière solide est placé en tant qu'accumulateur de chaleur (26) entre la turbine à gaz (18) et l'échangeur de chaleur (24).

6. Système de chauffage d'une maison ou d'une pièce suivant l'une des revendications 1 à 5 précédentes, dans lequel pour emmagasiner de l'énergie il est prévu un volant qui peut être entraîné par la turbine à gaz (18) et qui a une génératrice électrique.

7. Système de chauffage d'une maison ou d'une pièce suivant l'une des revendications 1 à 6 précédentes, dans lequel il est raccordé un dispositif d'accumulation, qui peut se charger pendant la phase de fonctionnement de l'unité turbine à gaz/compresseur/génératrice.

8. L'utilisation du système de chauffage d'une maison ou d'une pièce suivant l'une des revendications 1 à 7 précédentes, pour la production de courant électrique avec et sans utilisation de la chaleur des gaz perdus.

9. L'utilisation du système de chauffage d'une maison ou d'une pièce suivant l'une des revendications 1 à 7 précédentes, comme unité mobile pour la production de chaleur et de courant électrique.

10. L'utilisation du système de chauffage d'une maison ou d'une pièce suivant l'une des revendications 1 à 7 précédentes, comme appareil de chauffage à turbocompresseur indépendant du courant électrique.
